# EUROPÄISCHE PATENTANMELDUNG

(11) **EP 4 265 976 A1**
(43) Veröffentlichungstag der Anmeldung: **25.10.2023**
(21) Anmeldenummer: 23166289.1
(22) Anmeldetag: 03.04.2023
(51) Int. Cl.: F24H 1/00, B60H 1/22, F24H 1/12, F24H 9/1818, F24H 9/20, F24H 9/00, H05B 1/02

(54) **ELEKTRISCHE HEIZVORRICHTUNG**

(30) Priorität: 20.04.2022 DE 102022109556
(71) Anmelder: Eberspächer catem GmbH & Co. KG, 76863 Herxheim (DE)
(72) Erfinder: Niederer, Michael, 76889 Kapellen-Drusweiler (DE); Walz, Kurt, 76767 Hagenbach (DE); Barner, Sascha, 76767 Hagenbach (DE)
(74) Vertreter: Grünecker Patent- und Rechtsanwälte PartG mbB

(57) **Zusammenfassung**

Elektrische Heizvorrichtung (2) für ein Kraftfahrzeug mit einem Gehäuse (4), das im Hinblick auf eine Anpassung der elektrischen Heizvorrichtung (2) an die Anforderungen der Elektromobilität mehrere fluidisch getrennte Zirkulationskammern (38, 40, 42) und eine gegenüber den Zirkulationskammern (38, 40, 42) abgedichtete Anschlusskammer (50) umfasst, wobei die Zirkulationskammern (38, 40, 42) jeweils mit einer Einlassöffnung (14.1 bis 14.3) und einer Auslassöffnung (18.1 bis 18.3) für ein zu erwärmendes Fluid kommunizieren und zumindest eine PTC-Heizeinrichtung (52) mit zumindest einer der Zirkulationskammern (38, 40, 42) wärmeleitend gekoppelt ist, wobei die PTC-Heizeinrichtung (52) zumindest ein PTC-Element (66) und zur Bestromung des PTC-Elements (66) mit unterschiedlicher Polarität elektrisch leitend mit dem PTC-Element (66) verbundene Leiterbahnen (68) aufweist und in der Anschlusskammer (50) elektrisch angeschlossen und steuerungsmäßig mit einer Steuerungseinrichtung verbunden ist, die in der Anschlusskammer aufgenommenen ist. Die Steuerungseinrichtung umfaßt einen Ladestrom-Modus, der beim Anschluss des Kraftfahrzeugs an eine Ladestromquelle zum Aufladen der Leistungsstrom-Batterie des Kraftfahrzeugs einen Ladestrom-Heizkreis der elektrischen Heizvorrichtung ansteuert, bei dem der Ladestrom-Heizkreis mit dem Ladestrom betrieben und ein die Leistungsstrom-Batterie temperierendes Fluid erwärmt wird, und einen Leistungsstrom-Modus, der beim elektrischen Vortrieb des Kraftfahrzeugs einen Leistungsstrom-Heizkreis der elektrischen Heizvorrichtung ansteuert, bei dem der Leistungsstrom-Heizkreis mit dem Leistungsstrom der Leistungsstrom-Batterie betrieben und ein den Innenraum des Kraftfahrzeugs temperierendes Fluid erwärmt wird.

## Beschreibung

Die vorliegende Erfindung betrifft eine elektrische Heizvorrichtung für bzw. in Kraftfahrzeug mit einem Gehäuse mit Ein- und Auslassöffnungen für ein zu erwärmendes Fluid, das eine Zirkulationskammer zum Hindurchleiten des zu erwärmenden Fluids durch das Gehäuse und eine Anschlusskammer für den elektrischen Anschluss von zumindest einer PTC-Heizeinrichtung aufweist. Die PTC-Heizeinrichtung hat zumindest ein PTC-Element und zur Bestromung des PTC-Elementes mit unterschiedlicher Polarität elektrisch mit dem PTC-Element verbundene Leiterbahnen. Die PTC-Heizeinrichtung ist wärmeleitend mit der Zirkulationskammer verbunden.

Eine solche elektrische Heizvorrichtung ist beispielsweise aus der auf die Anmelderin zurückgehenden EP 2 147 924 A1 bekannt. Bei diesem Stand der Technik ist das Gehäuse mehrteilig aufgebaut, wobei ein unteres Gehäuseteil nach Art einer Wanne die Zirkulationskammer definiert, die durch ein oberes Gehäuseelement, welches als Abdeckung für die Wanne dient, auch Heizrippen ausbildet, die in die Wanne hineinragen, in diese Heizrippen sind PTC-Heizeinrichtungen eingesetzt, die durch ein Keilelement in den Heizrippen verspannt und damit wärmeleitend mit den Heizrippen verbunden sind. Eine andere Lösung ist aus EP 2 884 817 A1 bekannt. Bei diesem Stand der Technik sind die Heizrippen in Form von Steckelementen ausgebildet, die in Steckelementaufnahmen gehalten sind, die innerhalb der besagten Trennwand vorgesehen sind. Bei den zuvor erwähnten Lösungen durchragen Kontaktzungen die Trennwand in Richtung auf die Anschlusskammer, in denen verschiedene PTC-Heizeinrichtungen zu Heizkreisen verbunden und elektrisch an den Leistungsstrom angeschlossen sind.

Jede der vorerwähnten elektrischen Heizvorrichtungen hat ein Gehäuse mit je einer Einlassöffnung und je einer Auslassöffnung.

Der vorliegenden Erfindung liegt das Problem zugrunde, eine elektrische Heizvorrichtung mit erhöhter Brauchbarkeit anzugeben. Dabei will die vorliegende Erfindung insbesondere eine elektrische Heizvorrichtung angeben, die sich für elektrisch betriebene beziehungsweise Hybridfahrzeuge eignet. Die vorliegende Erfindung will insbesondere eine elektrische Heizvorrichtung für ein KFZ angeben.

Nach der vorliegenden Erfindung wird vorgeschlagen, dass das Gehäuse mehrere fluidisch getrennte Zirkulationskammern aufweist, die jeweils mit einer Ein- und einer Auslassöffnung kommunizieren. Danach sind für sich getrennte Zirkulationskammern vorgesehen, um voneinander getrennte üblicherweise auch stofflich beziehungsweise chemisch unterschiedliche Medien zu erwärmen und durch das Gehäuse hindurchzuführen. Die elektrische Heizvorrichtung kann beispielsweise in einem Hybridfahrzeug unterschiedlichen Anforderungen genügen, die das Wärmemanagement stellt. So kann eine der Zirkulationskammern ein Medium aufnehmen, mit welchem über einen Wärmetauscher, der mit Luft überströmt wird, die Fahrgastzelle beziehungsweise die Frontscheibe der Fahrgastzelle beheizt wird. In einem solchen Fall wird als Fluid durch die Zirkulationskammer ein flüssiges Medium als Wärmetauschermedium geführt. In entsprechender Weise kann auch ein flüssiges Medium durch eine weitere innerhalb des gleichen Gehäuses vorgesehene weitere Zirkulationskammer geführt werden, welches beispielsweise der Erwärmung von Harnstoff bei einem Dieselhybridfahrzeug dient. Durch eine dritte weitere Zirkulationskammer kann beispielsweise ein ebenfalls flüssiges Medium geführt werden, welches erwärmt wird, um die Batterie im Vorfeld eines Ladevorgangs auf die nötige Temperatur zu bringen.

Es versteht sich, dass einzelne Zirkulationskammern voneinander abweichende Wärmeleistungen aufweisen, d. h. unterschiedliche Ausgangstemperaturen der zu erwärmenden Fluide an den jeweiligen Auslassöffnungen beziehungsweise auslassseitig bewirken. Die Zirkulationskammern können unterschiedlichen Heizleistungen und/oder voneinander abweichenden Fluiden zugeordnet sein. Auch können die einzelnen Zirkulationskammern und den diesen zugeordneten PTC-Heizeinrichtungen so gesteuert werden, dass unterschiedliche ausgangsseitige Fluidtemperaturen erreicht werden.

Dabei sind üblicherweise identische PTC-Heizeinrichtungen unterschiedlichen Zirkulationskammern zugeordnet. Die durch eine PTC-Heizeinrichtung erzeugte Wärme wird dementsprechend an verschiedene Zirkulationskammern übertragen und dort an die jeweiligen, üblicherweise voneinander abweichenden Fluide übertragen. Sämtliche PTC-Heizeinrichtungen der erfindungsgemäßen PTC-Heizvorrichtung sind bevorzugt identisch ausgebildet, und so ist die PTC-Heizvorrichtung skalierbar und wirtschaftlich herstellbar.

Im Hinblick auf eine kompakte Ausgestaltung der elektrischen Heizvorrichtung ist in der Anschlusskammer eine Steuerungseinrichtung vorgesehen, die in der Regel sämtlichen PTC-Heizeinrichtungen zugeordnet ist, d. h. die sämtliche PTC-Heizeinrichtungen der elektrischen Heizvorrichtung steuert. Der elektrische Anschluss an diese Steuerungseinrichtung kann wie in dem zuvor bereits erwähnten Stand der Technik erfolgen, indem beispielsweise jede der Zirkulationskammern mit einer im Grunde einheitlichen, jedenfalls in einer Ebene liegenden Trennwand versehen ist, die die Zirkulationskammer von der Anschlusskammer trennt und von den jeweiligen Anschlusszungen der PTC-Heizeinrichtungen durchragt ist, sodass diese innerhalb der Anschlusskammer elektrisch angeschlossen werden können.

Synergien werden gemäß einer bevorzugten Ausgestaltung der vorliegenden Erfindung auch dadurch erreicht, dass die unterschiedlichen Zirkulationskammern thermisch miteinander gekoppelt sind. Dies kann durch unmittelbare Anlage der Zirkulationskammern und Wärmeübertragung von einer Zirkulationskammer an die benachbarte Zirkulationskammer erfolgen. Denkbar ist beispielsweise, dass eine Zirkulationskammer mit nur geringer Wärmeleistung zur Erwärmung des dort geführten Fluides mit keiner eigenständigen PTC-Heizeinrichtung versehen ist, sondern Erwärmung dadurch erfährt, dass diese Zirkulationskammer thermisch mit einer anderen Zirkulationskammer gekoppelt ist, der für sich zumindest eine PTC-Heizeinrichtung zugeordnet ist. Dabei wird die mit der zumindest einen PTC-Heizeinrichtung versehene Zirkulationskammer eine weitaus höhere Wärmeleistung haben als die benachbart dazu vorgesehene, jedoch thermisch mit dieser gekoppelten Zirkulationskammer.

Im Hinblick auf eine gute Ausnutzung der von der PTC-Heizeinrichtung erzeugten Wärme und zur möglichst kompakten Ausgestaltung der elektrischen Heizvorrichtung wird gemäß einer bevorzugten Weiterbildung der vorliegenden Erfindung vorgeschlagen, dass zwischen zwei Zirkulationskammern zumindest eine PTC-Heizeinrichtung vorgesehen ist. Die zwischen benachbarten Zirkulationskammern vorgesehenen PTC-Heizeinrichtungen sind dabei üblicherweise konstruktiv in gleicher Weise wärmemäßig und mechanisch mit der jeweiligen Zirkulationskammer gekoppelt. Die Wärmeleistung in den jeweiligen Zirkulationskammern kann jedoch abweichen, abhängig von der Wärmeaufnahme des durch die jeweilige Zirkulationskammer hindurchgeleiteten Fluids. Dabei sind bevorzugt mehrere, üblicherweise eine Vielzahl von Zirkulationskammern hintereinander beziehungsweise übereinander gestapelt. In Stapelrichtung zwischen den einzelnen Zirkulationskammern befindet sich zumindest eine der PTC-Heizeinrichtungen. Die Zirkulationskammern können dabei bevorzugt durch Hohlprofilelemente gebildet sein, die jeweils identisch ausgebildet sind, so dass die PTC-Heizvorrichtung skalierbar und wirtschaftlich herstellbar ist. Dabei kann die Heizleistung der in der Mitte der Stapelung vorgesehenen PTC-Heizeinrichtungen wesentlich höher gewählt werden als die Heizleistung von solchen PTC-Heizeinrichtungen, die näher am Rand der Stapelung liegen. Dadurch ist es möglich, mittlere Zirkulationskammern bei guter thermischer Isolation gegenüber der Umgebung mit einer hohen Wärmeleistung zu versehen, wohingegen die gegenüber der Umgebung oder einer Außenwand des Gehäuses an- oder freiliegenden äußeren Zirkulationskammern lediglich eine geringe Wärmeleistung an das zu erwärmende Fluid abgeben und üblicherweise eine geringere Temperatur an der Ausgangsseite der Zirkulationskammer verwirklichen. Zumindest eine äußerste Zirkulationskammer einer solchen Stapelung kann keine eigenständige PTC-Heizeinrichtung aufweisen. Mit anderen Worten liegt keine allein dieser Zirkulationskammer zugeordnete PTC-Heizeinrichtung unmittelbar wärmeleitend gegen die entsprechende Zirkulationskammer an. Eine solche äußere Zirkulationskammer der Stapelung kann auch allein wärmeleitend mit zumindest einem Leistungstransistor einer in der Anschlusskammer vorgesehenen Steuerungseinrichtung gekoppelt sein. Die über diese Zirkulationskammer an das zu erwärmende Fluid übertragene Wärmeleistung hängt dementsprechend maßgeblich von der Verlustleistung der Leistungstransistoren ab, d. h. die entsprechende Zirkulationskammer dient überwiegend, wenn nicht gar ausschließlich der Kühlung des Leistungstransistors und damit der Steuerungseinrichtung der elektrischen Heizvorrichtung, wobei die durch die Entwärmung von dem Fluid aufgenommene Wärme außerhalb des Gehäuses zur Erwärmung einer Komponente des Fahrzeugs genutzt wird.

Die Steuerungseinrichtung der elektrischen Heizvorrichtung ist in besonderer Weise angepasst. Sie hat zumindest einen Ladestrom-Modus und einen Leistungsstrom-Modus. In diesen beiden Modi wird unterschiedlicher Strom in der Steuerungseinrichtung verarbeitet und in der Regel unterschiedlichen PTC-Heizeinrichtungen zugeführt.

Der Ladestrom-Modus nutzt den dem Fahrzeug zugeführten Ladestrom beim Aufladen der Leistungsstrom-Batterie des Kraftfahrzeuges. Diese Leistungsstrom-Batterie dient dem Antrieb des Kraftfahrzeuges, welches ein Elektrofahrzeug ist. In dem Ladestrom-Modus wird ein Ladestrom-Heizkreis der elektrischen Heizvorrichtung, der zumindest eine der PTC-Heizeinrichtungen umfasst, angesteuert. So wird dieser Ladestrom-Heizkreis mit dem Ladestrom betrieben. Der Ladestrom-Heizkreis temperiert dabei ein Fluid, insbesondere ein Arbeitsmedium für einen Wärmetauscher, welches die Leistungsstrom-Batterie temperiert. So wird in der elektrischen Heizvorrichtung mit dem Ladestrom ein Medium erwärmt, welches die Batterie erwärmt und damit die Leistungsaufnahme der Batterie beim Laden erhöht.

Dabei wird der Steuerungseinrichtung üblicherweise ein den Ladevorgang anzeigendes Signal übermittelt. Dieses Signal kann ein Signal aus dem Navigationssystem sein, welches die Annäherung des Fahrzeuges an eine Ladestromquelle signalisiert. Das Signal kann auch aufgrund der Kopplung des Ladestromkabels mit der Ladebuchse des Elektrofahrzeuges erzeugt werden.

Des Weiteren hat die Steuerungseinrichtung einen Leistungsstrom-Modus. In dem Leistungsstrom-Modus wird die wenigstens eine PTC-Heizeinrichtung des Leistungsstrom-Heizkreises mit dem Leistungsstrom der Leistungsstrom-Batterie betrieben. Wie zuvor erwähnt, ist die Leistungsstrom-Batterie die Quelle für den elektrischen Vortrieb des Kraftfahrzeuges. Der Leistungsstrom-Modus dient der Erwärmung eines Fluides, welches den Innenraum des Kraftfahrzeuges temperiert. Damit wird in dem Leistungsstrom-Modus die Komfort-Klimatisierung des Elektrofahrzeuges gesteuert. Diese Komfort-Klimatisierung kann verschiedene Warmluft-Ausgänge haben, die in der Fahrgastzelle verteilt sind. Die entsprechende Klimatisierung hat üblicherweise auch einen Lüftungsauslass zur Temperierung der Frontscheibe, sodass an diese feuchte Luft nicht oder in einem verminderten Umfang kondensieren kann.

Die Steuerungseinrichtung kann dabei ein das Starten des Fahrzeuges angebendes Signal nutzen, um den Leistungsstrom-Modus zu aktivieren. Ebenso gut kann die Beendigung des Ladevorganges, beispielsweise das Abstecken des Ladekabels von der Steuerungseinrichtung erkannt und als Signal verarbeitet werden, den Ladestrom-Modus zu beenden und stattdessen in den Leistungsstrom-Modus überzugehen.

Die elektrische Heizvorrichtung hat vorzugsweise auch noch einen Hilfs-Modus als Teil der Steuerungseinrichtung. Dieser wird beim Vortrieb des Kraftfahrzeuges mit einem Diesel-Verbrennungsmotor aktiviert. Bei dieser Weiterbildung ist das Fahrzeug ein Diesel-Hybridfahrzeug. In dem Hilfs-Modus wird die elektrische Heizvorrichtung zur Erwärmung von Harnstoff angesteuert, der beim Betrieb des Dieselmotors zur Abgasaufbereitung verwendet wird. Die wenigstens eine PTC-Heizeinrichtung, die Teil des Hilfs-Heizkreises der elektrischen Heizvorrichtung ist, wird im Hilfs-Modus mit einem Hilfs-Leistungsstrom betrieben.

Wie die obige Beschreibung belegt, sind den entsprechenden Modi dabei üblicherweise jeweils voneinander getrennte Medienkreise zugeordnet.

Gemäß der vorliegenden Erfindung sind mindestens zwei der PTC-Heizeinrichtungen so angepasst, dass sie mit voneinander abweichendem Leistungsstrom versorgt werden. Diese Anpassung erfolgt durch entsprechende Anpassung der üblicherweise in baulicher Einheit mit der elektrischen Heizvorrichtung vorgesehenen Steuerungseinheit. Diese kann insbesondere Leistungsstrom mit zwei unterschiedlichen Spannungen steuern und getrennt einzelnen PTC-Heizeinrichtungen zuführen. Der voneinander abweichende Leistungsstrom unterscheidet sich dabei insbesondere durch die Spannung des Leistungsstromes.

So kann beispielsweise zumindest eine PTC-Heizeinrichtung und damit die dieser PTC-Heizeinrichtung zugeordnete Zirkulationskammer mit einem Ladestrom einer Ladestation leistungsmäßig versorgt werden. Diese entsprechende Zirkulationskammer erwärmt dabei üblicherweise ein Arbeitsmedium zur Erwärmung der Batterie des Elektrofahrzeuges, in dem die elektrische Heizvorrichtung verbaut ist. Die zumindest eine, der Zirkulationskammer für die Batteriekonditionierung zugeordnete PTC-Heizeinrichtung hat üblicherweise PTC-Elemente, die so auf eine Spannungsversorgung beispielsweise bei 800 Volt angepasst sind, dass sich die PTC-Elemente auf eine Temperatur von 50°C ± 10°C regeln lassen.

Zumindest eine PTC-Heizeinrichtung, die beispielsweise einer Zirkulationskammer zur Erwärmung eines Wärmetauschermediums für die Erwärmung des Fahrgastraumes und der Frontscheibe zugeordnet ist, wird - wie oben beschrieben - mit dem Leistungsstrom des Elektrofahrzeuges versorgt. Die Steuerungseinrichtung leitet dementsprechend den Leistungsstrom für den elektrischen Fahrantrieb des Fahrzeuges an die zumindest eine PTC-Heizeinrichtung der entsprechenden Zirkulationskammer. In dieser Zirkulationskammer wird ein Medium erwärmt, welches über einen Wärmetauscher Luft erwärmt, die durch einen HVAC und den dort vorgesehenen Wärmetauscher geleitet und in üblicher Weise an verschiedene Positionen innerhalb der Fahrgastzelle und der Frontscheibe nach Vorgaben einer Klimaautomatik oder nach individuellen Vorstellungen des Benutzers geleitet wird. Das zumindest eine dieser PTC-Heizeinrichtung zugeordnete PTC-Element wird dabei auf eine weitaus höhere Temperatur gebracht als das PTC-Element der Batteriekonditionierung. Die Temperatur liegt um den Faktor 4 bis 5 höher. Insbesondere beträgt die entsprechende Solltemperatur des PTC-Elementes 240°C ± 20°C. Auch hier leitet die Steuerungseinrichtung den Leistungsstrom des Elektrofahrzeuges an die zumindest eine PTC-Heizeinrichtung weiter, der üblicherweise eine Spannung von etwa 400 Volt hat.

Die Steuerungseinrichtung wird in der Regel bei einem Ladevorgang auch zur Schonung der Batterie des Elektrofahrzeuges für den Antrieb den Betrieb der zumindest einen PTC-Heizeinrichtung zu dem zweiten Mediumkreis zur Erwärmung der Fahrgastzelle aussetzen. Die diesem zweiten Mediumkreis zugeordnete Zirkulationskammer sollte unmittelbar an eine PTC-Heizeinrichtung angrenzen, die der Batteriekonditionierung dient. Jedenfalls erfolgt durch Wärmekopplung zwischen dem ersten Mediumkreis für die Batteriekonditionierung und dem zweiten Mediumkreis für die Erwärmung der Fahrgastzelle auch eine Erwärmung des Mediums in dem zweiten Mediumkreis, sodass auch im Rahmen des Ladevorgangs die Fahrgastzelle temperiert wird, ohne dass der Batterie des Elektroantriebs in dem Fahrzeug Leistung entnommen wird.

Ein dritter Mediumkreis kann beispielsweise benachbart zu dem zweiten Mediumkreis und in einer Stapelung auf der dem ersten Mediumkreis gegenüberliegenden Seite des zweiten Mediumkreises vorgesehen sein. Bei einer Stapelung von Zirkulationskammern liegt die Zirkulationskammer des ersten Mediumkreises benachbart zu der Zirkulationskammer des zweiten Mediumkreises und diese in Stapelrichtung benachbart zu der Zirkulationskammer des dritten Mediumkreises. Dieser dritte Mediumkreis kann beispielsweise mit einem Leistungsstrom betrieben werden, der in dem Fahrzeug Hilfsaggregate wie das Licht oder das Radio versorgt. Dieser Hilfs-leistungsstrom hat zwischen 12 Volt und 48 Volt. Die dafür vorgesehene Niedervoltbatterie kann sich aus der Hochvoltbatterie für den Fahrantrieb speisen oder aber Energie speichern, die durch Rekuperation gewonnen wird. Die Solltemperatur dieses dritten Mediumkreises liegt üblicherweise zwischen der Solltemperatur des ersten und des zweiten Mediumkreises. Bevorzugt wird das PTC-Element auf eine Solltemperatur von 160°C ± 20°C geregelt. In diesem dritten Mediumkreis kann beispielsweise Harnstoff für einen Dieselhybrid erwärmt werden. Der Harnstoff kann entweder unmittelbar in dem Mediumkreis geführt und darin erwärmt werden oder aber über einen Wärmetauscher erwärmt werden, während in dem Mediumkreis ein Arbeitsmedium zirkuliert. In diesem Fall befindet sich in dem dritten Mediumkreis ein Arbeitsmedium.

Weitere Einzelheiten und Vorteile der vorliegenden Erfindung ergeben sich aus der nachfolgenden Beschreibung eines Ausführungsbeispiels in Verbindung mit der Zeichnung:
- Figur 1: eine perspektivische stirnseitige Ansicht eines Ausführungsbeispiels einer elektrischen Heizvorrichtung;
- Figur 2: eine perspektivische Querschnittsansicht des in Figur 1 gezeigten Ausführungsbeispiels von einer ersten Seite;
- Figur 3: eine weitere perspektivische Querschnittsansicht des in Figur 1 gezeigten Ausführungsbeispiels von der gegenüberliegenden Seite ;
- Figur 4: eine perspektivische stirnseitige Ansicht des unbestückten Gehäuses des Ausführungsbeispiels nach den Figuren 1 bis 3;
- Figur 5: eine perspektivische Stirnseitenansicht einer Stapelung von Hohlprofilelementen, die in das Gehäuse nach den Figuren 1 bis 3 eingesetzt ist;
- Figur 6: eine perspektivische Seitenansicht eines Ausführungsbeispiels einer PTC-Hei-zeinrichtung, die in dem Ausführungsbeispiel zum Einsatz kommt und
- Figur 7: eine perspektivische Seitenansicht des in Figur 6 gezeigten Ausführungsbeispiels.

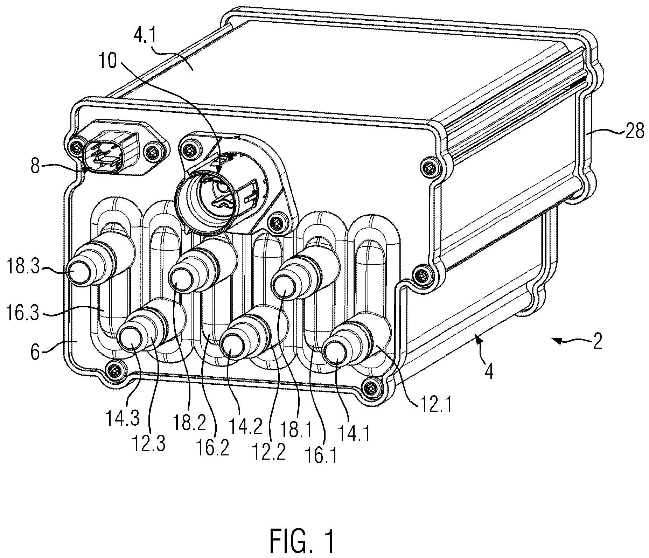

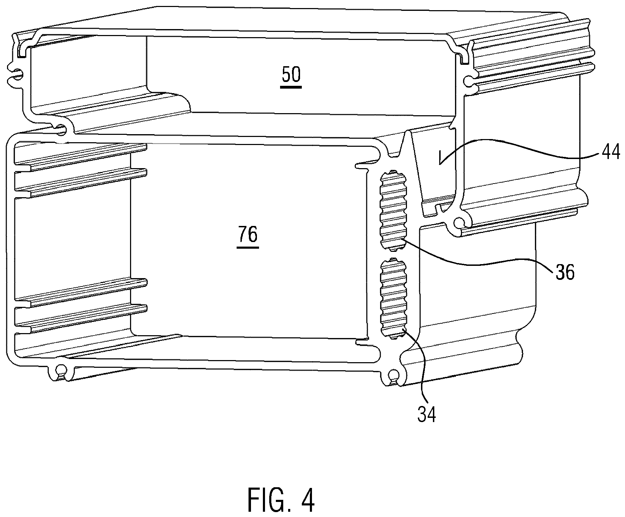

Die Figuren 1 bis 5 lassen Details einer elektrischen Heizvorrichtung 2 erkennen, wobei Figur 4 insbesondere die Ausgestaltung eines Gehäuses 4 erkennen lässt, welches als Strangpressprofil und aus Aluminium hergestellt ist. Die stirnseitige Ansicht nach Figur 1 lässt eine Abdeckung 6 erkennen, die abgedichtet gegen eine Stirnseite des Gehäuses 4 angelegt ist.

Im oberen Teil der Abdeckung 6 sind ein Steuerstecker 8 und ein Leistungsstecker 10 zu erkennen, an welche Leitungen für Steuersignale beziehungsweise dem Leistungsstrom angeschlossen werden. Im unteren Bereich sind drei Einlassstutzen 12.1 bis 12.3 zu erkennen, die Einlassöffnungen 14.1 bis 14.3 ausbilden. Schräg darüber sind die zugeordneten Auslassstutzen 16.1 bis 16.3 zu erkennen, die entsprechende Auslassöffnungen 18.1 bis 18.3 umgeben beziehungsweise bilden.

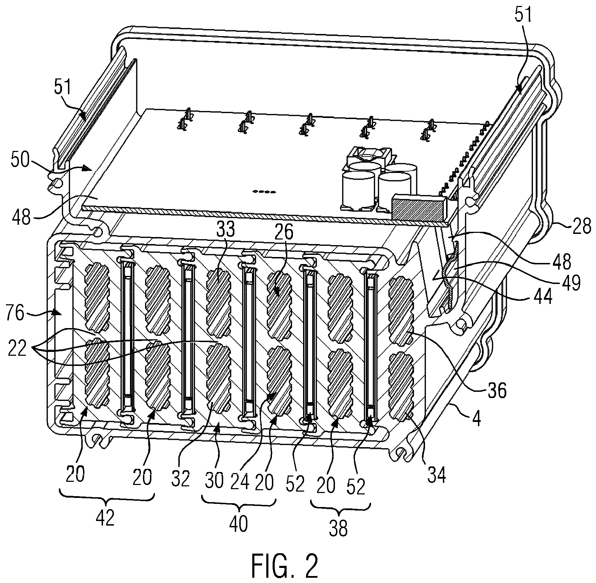

Wie insbesondere Figur 2 vermittelt, wird die durch die jeweiligen Einlassstutzen 12.2 und 12.3 eingeleitete Strömung jeweils in ein Hohlprofilteil 20 eingeleitet, welches durch eine Querwand 22 in ein unteres Zirkulationssegment 24 und ein oberes Zirkulationssegment 26 unterteilt ist. Die Strömung durchsetzt nach dem Eintreten in das Gehäuse 4 das untere Zirkulationssegment 24 und wird auf der der Figur 2 abgewandten Rückseite über eine weitere Abdeckung 28 und stirnseitig zu dem Zirkulationssegment vorgesehene Strömungsführungen der Abdeckung 28 umgelenkt und über das obere Zirkulationssegment 26 zurückgeführt. In der Abdeckung 6 wird die Strömung von dem oberen Zirkulationssegment 26 auf das benachbarte Hohlprofil 30 überführt, und zwar in dessen unteres Zirkulationssegment 32. Dort wird die Strömung in gleicher Weise wie zuvor geführt, in der Abdeckung 28 nach oben in ein oberes oberes Zirkulationssegment 33 des benachbarten Hohlprofils 30 umgelenkt und schließlich über den Auslassstutzen 16.1 ausgeleitet.

In identischer Weise erfolgt die Strömungsführung für den linken Ein- und Auslassstutzen 12.3 und 16.3 gemäß Figur 1 bzw. 2.

Wir die Figuren 2 und 4 erkennen lassen, bildet das Gehäuse 4 selbst ein unteres Zirkulationssegment 34 und ein oberes Zirkulationssegment 36 aus. Dem unteren Zirkulationssegment 34 ist der Einlassstutzen 12.1 zugeordnet. Auch hier erfolgt die Strömungsführung wie zuvor beschrieben durch Umlenkung von dem unteren Zirkulationssegment 34 in das obere Zirkulationssegment 36 im Bereich der weiteren Abdeckung 28 und die Überführung in das rechte Hohlprofilteil 20 gemäß den Figuren 1 und 2.

Mithin ergeben sich verschiedene durch die in Reihe geschalteten Zirkulationssegmente 24, 26, 32, 34 gebildete Zirkulationskammern. Vorliegend sind drei Zirkulationskammern 38, 40, 42 verwirklicht.

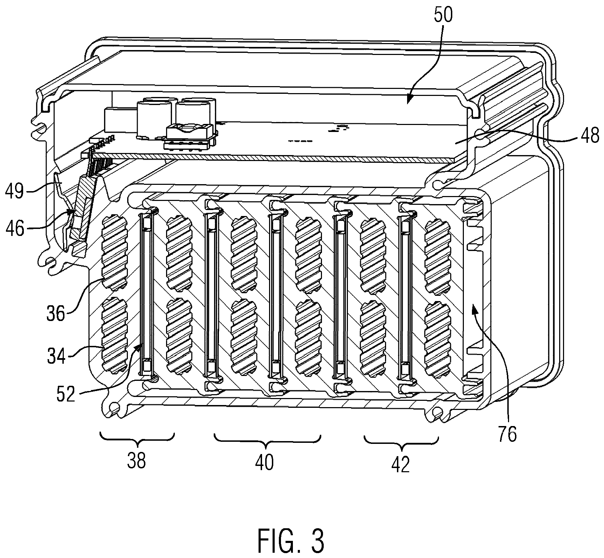

Figur 4 zeigt eine durch das stranggepresste Profil des Gehäuses 4 selbst gebildete schräge Anlagefläche 44. Wie die Figuren 2 und 3 verdeutlichen, ist diese schräge Anlagefläche 44 wärmeleitend mit einem Leistungstransistor 46 gekoppelt ist, der von einer Unterseite einer bestückten Leiterplatte 48 abragt. Dazu ist der Leistungstransistor 46 über eine gegen das stranggepresste Profil des Gehäuses 4 anliegende Feder 49 gegen die Anlagefläche 44 flächig und bevorzugt unter Zwischenlage einer Kapton-Folie angelegt. Die bestückte Leiterplatte 48 ist innerhalb einer Anschlusskammer 50 vorgesehen, welche umfänglich von dem Gehäuse 4 umgeben und endseitig von den beiden Abdeckungen 6, 28 abgedeckt (vgl. Figuren 2 und 3). Die bestückte Leiterplatte 48 bildet ein Beispiel für eine in baulicher Einheit mit dem Leistungsteil der PTC-Heizvorrichtung 2 vorgesehene Steuervorrichtung. Ein die Anschlusskammer 50 oberseitig abdeckender Gehäusedeckel 4.1 ist dichtend in eine Nut 51 des stranggepresste Profil des Gehäuses 4 eingesetzt und dichtend mit den beiden Abdeckungen 6, 28 verbunden.

Die von dem Leistungstransistor 46 beim Steuern der Heizleistung der elektrischen Heizvorrichtung 2 erzeugte Verlustleistung wird über die Anlagefläche 44 auf die beiden Zirkulationssegmente 34, 36 übertragen. So erfolgt in diesen eine Vorerwärmung des eingeleiteten Fluids beziehungsweise eine Kühlung des beziehungsweise der Leistungstransistoren 46. Zur bestmöglichen Entwärmung des Leistungstransistors 46 kann auch die Strömungsführung abgeändert werden, so dass durch den Einlassstutzen 14.1 eingeleitetes und maximal kaltes Fluid zunächst das obere Zirkulationssegment 36 durchströmt, das an die Anlagefläche 44 angrenzt. Es versteht sich dass der Leistungstransistors 46 aus gleichen Gründen möglichst nahe zu dem Einlassstutzen 14.1 anzuordnen ist.

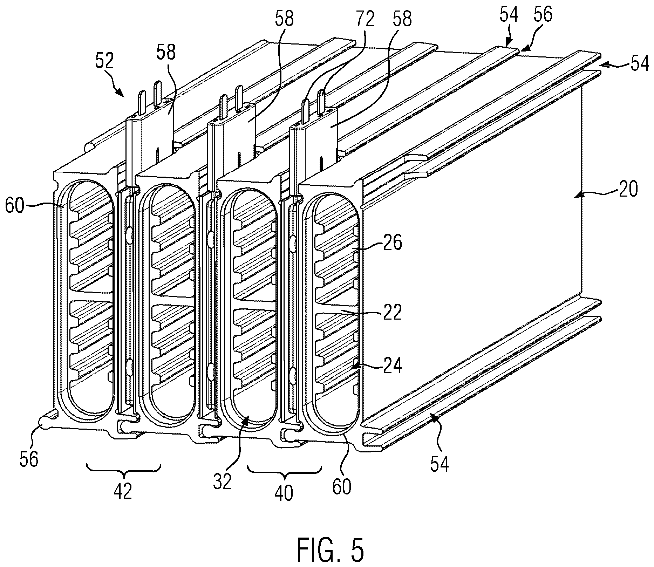

Nachfolgend werden unter Bezugnahme auf die Figuren 5 bis 7 die Hohlprofilteile 20 sowie mit Bezugszeichen 52 gekennzeichnete PTC-Heizeinrichtungen näher erläutert, die zwischen den einzelnen Hohlprofilteilen 20 vorgesehen sind.

Ersichtlich haben die Hohlprofilteile 20 an ihren oberen und unteren Enden zugeordnete Nut-Feder-Verbindungselement 54, 56, durch welche die jeweiligen Hohlprofilteile 20 formschlüssig miteinander verbunden und als Einheit zu handhaben sind, und zwar unter Einschluss der zwischen den einzelnen Hohlprofilteilen 20 aufgenommen PTC-Heizeinrichtungen 52. Diese haben ein Steckergehäuse 58, welches in einem Bereich seitlich über die Hohlprofilteile 20 hinaus geführt ist, in denen oben die zugeordneten Nut-Feder-Verbindungselemente 54, 56 weggenommen worden sind. Ersichtlich werden identische Hohlprofilteile 20 zur Erzeugung der in Figur 5 gezeigten Heizzelle 59 der PTC-Heizvorrichtung 2 verwendet. Über eine Trennwand 61 ist diese Anschlusskammer 50 von einer Aufnahmekammer für die Heizzelle 59 getrennt.

Die Hohlprofilteile 20 sind beispielsweise stranggepresst und danach spanend bearbeitet. Stirnseitig sind die die Strömungsführung bewirkenden Konturen der Hohlprofilteile 20 von Anschlusszylindern 60 zum dichtenden Anschluss der Abdeckungen 6, 28 überragt. Die an dem stirnseitigen Ende der jeweiligen Hohlprofilteile 20 vorgesehenen Anschlusszylinder 60 führen zu den jeweiligen Zirkulationssegmenten 24, 26 führt und sind mit der Abdeckung 6, 28 beziehungsweise der Ein- beziehungsweise den jeweiligen Auslassstutzen 12, 16 verbunden. Diese Bauteile können mit dem Zylinderabschnitt 60 verklebt oder in anderer Weise fluiddicht verbunden sein.

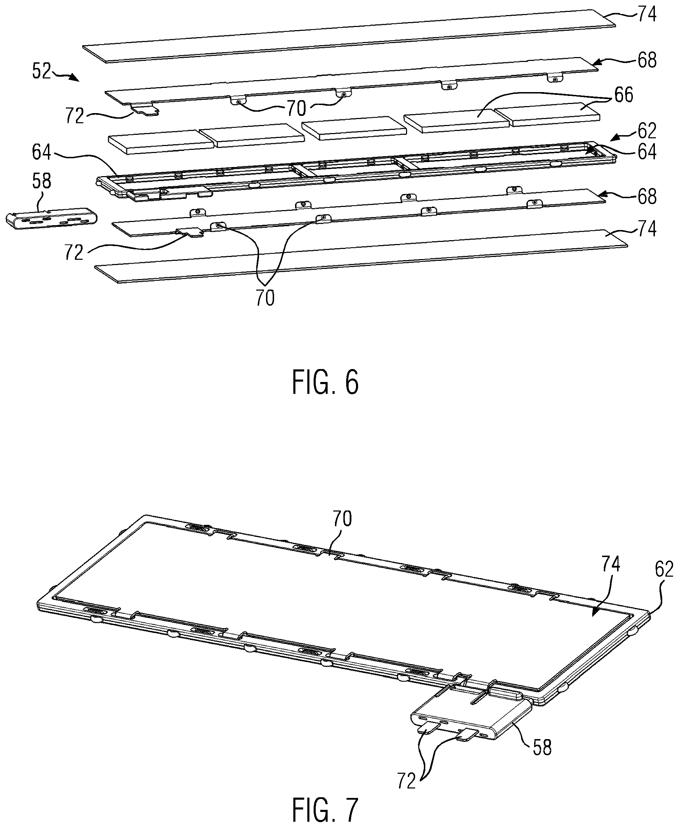

Die Figuren 6 und 7 verdeutlichen die PTC-Heizeinrichtung 52, die einen Positionsrahmen 62 aus einem elektrisch isolierenden Material aufweist, welcher Aufnahmen 64 ausbildet, in welche Aufnahmen 64 PTC-Elemente aus Keramik mit einer beidseitig daran vorgesehenen Metallisierung eingelegt werden, die mit Bezugszeichen 66 gekennzeichnet sind. Gegen diese PTC-Elemente 66 liegen Kontaktbleche 68 als Leiterbahnen an, die der Bestromung der PTC-Elemente 66 mit unterschiedlicher Polarität dienen. Die Kontaktbleche 68 haben durch Stanzen und Biegen hergestellte Federzungen 70, die in zugeordnete Ausnehmungen des Positionsrahmens 62 eingreifen, um die Kontaktbleche 68 mit dem Positionsrahmen 62 zu verbinden. Darüber hinaus bildet jedes Kontaktblech 68 je eine Anschlussfahne 72 aus, die seitlich von dem jeweiligen Kontaktblech 68 abragt. Mit Bezugszeichen 74 sind Isolierlagen aus Keramik gezeigt, die außen gegen die Kontaktbleche 68 anliegen, um diese elektrisch gegenüber den jeweiligen Hohlprofilteilen 20 zu isolieren, die zumindest über die Nut-Feder-Verbindungselemente 54, 56 auch elektrisch miteinander verbunden sind. Die einzelnen Anschlussfahnen 72 werden nach der Montage der PTC-Heizeinrichtung mit dem Steckergehäuse 58 überzogen (vgl. Figuren 5 und 6).

Eine einziges PTC-Heizeinrichtung 52 wird zwischen benachbarte Hohlprofilteile 20 eingesetzt.

Dabei können durch unterschiedliche PTC-Elemente 66 bei im Grunde gleicher konstruktiver Ausgestaltung der PTC-Heizeinrichtungen diese mit unterschiedlichen elektrischen Leistungen ausgebildet werden. So kann die Dicke der PTC-Elemente 66 variiert werden. Die Federzungen 70 sind in Grenzen innerhalb der Aufnahmen 64 des Positionsrahmens 62 beweglich, sodass auch mit unterschiedlich dicken PTC-Elementen 66 eine PTC-Heizeinrichtung 52 in baulicher Einheit hergestellt werden kann. Auch können in die jeweiligen Aufnahmen 64 Dummies oder Platzhalterelemente eingesetzt werden, die für sich keine Wärme erzeugen die Aufnahme 64 in dem Positionsrahmen aber wie ein PTC Element zumindest teilweise ausfüllen. Auch durch diese Maßnahme lässt sich die elektrische Leistung der einzelnen PTC-Heizeinrichtungen 52 anpassen.

Die Figur 2 und 3 verdeutlichen die in Figur 5 gezeigte Baugruppe ergänzt durch eine weitere PTC-Heizeinrichtung 52 und ein weiteres Hohlprofilteil 20 nach dem Einbringen in das Gehäuse 4. Die jeweiligen Hohlprofilteile 20 sind nach Art einer Schichtung unter Zwischenlage der PTC-Heizeinrichtungen 52 nebeneinander vorgesehen. In Figur 2 ist links neben dieser Schichtung eine Federaufnahmekammer 76 zu erkennen, in den nach dem Einbringen der Heizzelle 59, d.h. der gestapelten Anordnung aus PTC-Heizeinrichtungen 52 und Hohlprofilteilen 20 eine Feder eingebracht werden kann, um die Hohlprofilteile 20 gegen die dazwischen vorgesehenen PTC-Heizeinrichtungen 52 unter Vorspannung anzulegen und so eine gute Wärmeauskopplung einerseits und andererseits eine gute elektrische Kontaktierung der PTC-Elemente 66 mit den zugehörigen Kontaktblechen 68 zu erreichen.

### Bezugszeichenliste

- 2: Elektrische Heizeinrichtung
- 4: Gehäuse
- 4.1: Gehäusedeckel
- 6: Abdeckung
- 8: Steuerstecker
- 10: Leistungsstecker
- 12.1 bis 12.3: Einlassstutzen
- 14.1 bis 14.3: Einlassöffnung
- 16.1 bis 16.3: Auslassstutzen
- 18.1 bis 18.3: Auslassöffnung
- 20: Hohlprofilteil
- 22: Querwand
- 24: unteres Zirkulationssegment
- 26: oberes Zirkulationssegment
- 28: weitere Abdeckung
- 30: benachbartes Hohlprofil
- 32: unteres Zirkulationssegment des benachbarten Hohlprofils
- 33: oberes Zirkulationssegment des benachbarten Hohlprofils
- 34: unteres Zirkulationssegment des Gehäuses
- 36: oberes Zirkulationssegment des Gehäuses
- 38: Zirkulationskammer
- 40: Zirkulationskammer
- 42: Zirkulationskammer
- 44: Anlagefläche
- 46: Leistungstransistor
- 48: Leiterplatte
- 49: Feder
- 50: Anschlusskammer
- 51: Nut
- 52: PTC-Heizeinrichtung
- 53: Anschlusszylindern
- 54: Nut-Feder-Verbindungselement
- 56: Nut-Feder-Verbindungselement
- 58: Steckergehäuse
- 59: Heizzelle
- 60: Zylinderabschnitt
- 61: Trennwand
- 62: Positionsrahmen
- 64: Aufnahme
- 66: PTC-Element
- 68: Kontaktblech
- 70: Federzunge
- 72: Anschlussfahne
- 74: Isolierlage
- 76: Federaufnahmekammer

## Patentansprüche

1. Elektrische Heizvorrichtung (2) für ein Kraftfahrzeug mit einem Gehäuse (4), in dem mehrere fluidisch getrennte Zirkulationskammern (38, 40, 42) und eine gegenüber den Zirkulationskammern (38, 40, 42) abgedichtete Anschlusskammer (50) vorgesehen sind, wobei die Zirkulationskammern (38, 40, 42) jeweils mit einer Einlassöffnung (14.1 bis 14.3) und einer Auslassöffnung (18.1 bis 18.3) für ein zu erwärmendes Fluid kommunizieren und zumindest eine PTC-Heizeinrichtung (52) mit zumindest einer der Zirkulationskammern (38, 40, 42) wärmeleitend gekoppelt ist, wobei die PTC-Heizeinrichtung (52) zumindest ein PTC-Element (66) und zur Bestromung des PTC-Elements (66) mit unterschiedlicher Polarität elektrisch leitend mit dem PTC-Element (66) verbundene Leiterbahnen (68) aufweist und in der Anschlusskammer (50) elektrisch angeschlossen und steuerungsmäßig mit einer Steuerungseinrichtung verbunden ist, die in der Anschlusskammer aufgenommenen ist und umfaßt
einen Ladestrom-Modus, der beim Anschluss des Kraftfahrzeugs an eine Ladestromquelle zum Aufladen der Leistungsstrom-Batterie des Kraftfahrzeugs einen wenigstens eine der PTC-Heizeinrichtungen (52) umfassenden Ladestrom-Heizkreis der elektrischen Heizvorrichtung (2) ansteuert, der ein die Leistungsstrom-Batterie temperierendes Fluid erwärmt, wobei in dem Ladestrom-Modus die wenigstens eine PTC-Heizeinrichtung (52) des Ladestrom-Heizkreises mit dem Ladestrom betrieben wird,
und
einen Leistungsstrom-Modus, der beim elektrischen Vortrieb des Kraftfahrzeugs einen wenigstens eine der PTC-Heizeinrichtungen (52) umfassenden Leistungsstrom-Heizkreis der elektrischen Heizvorrichtung (2) ansteuert, der ein den Innenraum des Kraftfahrzeugs temperierendes Fluid erwärmt, wobei in dem Leistungsstrom-Modus die wenigstens eine PTC-Heizeinrichtung (52) des Leistungsstrom-Heizkreises mit dem Leistungsstrom der Leistungsstrom-Batterie betrieben wird.

2. Elektrische Heizvorrichtung (2) nach Anspruch 1, **dadurch gekennzeichnet, dass die** Steuerungseinrichtung einen Hilfs-Modus umfasst, der beim Vortrieb des Kraftfahrzeugs mit einem Diesel-Verbrennungsmotor einen wenigstens eine der PTC-Heizeinrichtungen (52) umfassenden Hilfs-Heizkreis der elektrischen Heizvorrichtung (2) zur Erwärmung von Harnstoff ansteuert, wobei in dem Hilfs-Modus die wenigstens eine PTC-Heizeinrichtung (52) des Hilfs-Heizkreises mit einem Hilfsleistungsstrom betrieben wird.

3. Elektrische Heizvorrichtung (2) nach Anspruch 1 oder 2, **dadurch gekennzeichnet, dass** das PTC-Element (66) der wenigstens einen PTC-Heizeinrichtung (52) des Ladestrom-Heizkreises auf eine Solltemperatur von 50°C +/-10°C geregelt wird.

4. Elektrische Heizvorrichtung (2) nach einem der vorherigen Ansprüche, **dadurch gekennzeichnet, dass** das PTC-Element (66) der wenigstens einen PTC-Heizeinrichtung (52) des Leistungsstrom-Heizkreises auf eine Solltemperatur von 240°C +/-20°C geregelt wird.

5. Elektrische Heizvorrichtung (2) nach einem der Ansprüche 2 bis 4, **dadurch gekennzeichnet, dass** das PTC-Element (66) der wenigstens einen PTC-Heizeinrichtung (52) des Hilfs-Heizkreises auf eine Solltemperatur von 160°C +/-20°C geregelt wird.
